# EUROPEAN PATENT SPECIFICATION

(11) **EP 2 520 403 B1**
(45) Date of publication and mention of the grant of the patent: **08.06.2016**
(21) Application number: 12166797.6
(22) Date of filing: 04.05.2012
(51) Int. Cl.: B29C 33/38, B29C 45/73

(54) **Cavity insert for a preform injection mold**
Hohlraumeinsatz für eine Vorform-Injektionsform
Insert à cavité pour un moule d'injection de préforme

(30) Priority: 04.05.2011 NL 2006712
(43) Date of publication of application: 07.11.2012
(73) Proprietor: Alpha Investment B.V., 7825 VG Emmen (NL)
(72) Inventor: van Manen, Hendrik Johan, 7822 EH Emmen (NL); Albers, Hendrikus Johannes Theodorus, 7751 GK Dalen (NL)
(74) Representative: V.O.

(56) References cited:
- DE-A1- 3 140 711
- DE-A1- 10 024 625
- DE-A1-102007 002 093
- US-A- 4 054 630
- US-A1- 2004 151 937
- US-B1- 6 425 752
- US-B2- 6 488 881

## Description

### BACKGROUND OF THE INVENTION

The invention relates to a cavity insert according to the introductory portion of claim 1. Such a cavity insert is known from US patent 6 488 881. In this cavity insert, the tubular inner part and the tubular outer part are machined of steel.

Injection mold assemblies for injection molding preforms, such as preforms of PET material from which bottles may be molded by blow-molding are well known. Examples of such injection mold assemblies have been disclosed in (in order of succession) U.S. patent 5 498 150, German patent application 100 24 625, U.S. patent 6 569 370, U.S. patent applications 2006/0283210, 2007/0148280, 2008/0268083 and U.S. patent 7 713 054. U.S. patent application 2004/151937 discloses a mould with a cavity insert having a tubular part and a further part of a different, hardened material that are stacked in opening and closing direction of the mould.

In injection molding of mass produced products, such as preforms for blow molding bottles for packaging beverages that are typically injection molded in large multi-cavity injection mold assemblies, it is of particular importance for reducing manufacturing costs to reduce injection molding cycle times, while ensuring that product quality meets the imposed requirements.

### SUMMARY OF THE INVENTION

Accordingly, it is an object of the present invention to provide a solution that allows reducing injection molding cycle times. According to the intention, this is achieved by providing a cavity insert according to claim 1. Preferred embodiments of the invention are defined in the dependent claims 2 to 11. The invention is also embodied in a mold plate according to claim 12, which carries at least one cavity insert according to the invention.

By providing that the inner part and the outer part are of different materials, the material of the inner part, having a specific thermal conductivity higher than the specific thermal conductivity of the material of the outer part, directly bounds the product cavity, so that heat from injected product material in direct contact with the inner part can be dissipated quickly and the material is cooled quickly and evenly. In turn, this allows reducing injection molding cycle times. Because only the inner part is of a material with a relatively high specific thermal conductivity, the material for the outer part surrounding the inner part can be selected with regard to other criteria, such as wear resistance, strength, stiffness, impact resistance and thermal expansion coefficient.

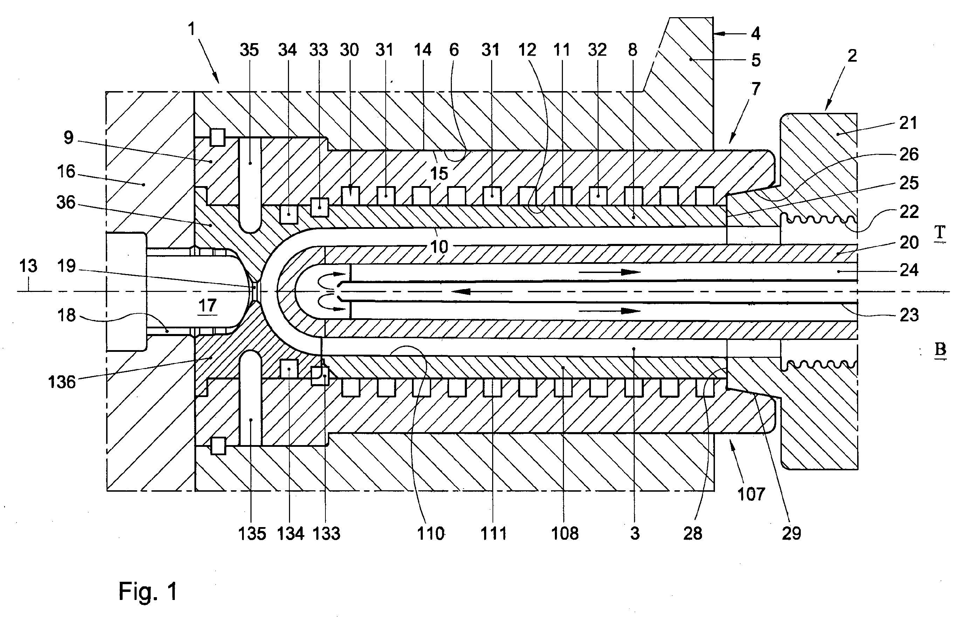

Further objects, features, effects and details of the invention are described below with reference to the drawing.

### BRIEF DESCRIPTION OF THE DRAWING

The drawing is a sectional side view of a portion of a multi-cavity injection mold assembly with two examples of a cavity insert according to the invention.

### DETAILED DESCRIPTION

In the drawing, a portion of a first mold-half 1 and a second mold-half 2 of a multi-cavity injection mold for molding beverage bottle preforms are shown. In closed condition, as shown in the drawing, the mold-halves 1, 2 leave an elongated product cavity 3. The first mold half 1 has a mold plate assembly 4 comprising a mold plate 5 having an insert cavity 6 and a cavity insert 7 mounted therein. The top portion T of the drawing above dash-and-dot centre line 13 shows a portion of the mold half 1 with (one half of) a first example of a cavity insert 7 mounted therein, while a bottom portion B of the drawing below the dash-and-dot centre line 13 shows a portion of the mold half 1 with (one half of) a second example of a cavity insert 107 mounted therein. Parts or portions of the cavity insert 107 according to the second example that are identical to corresponding parts or portions of the cavity insert 7 according to the first example are not separately designated or designated by the same reference numerals. First, the cavity insert 7 according to the first example and more general considerations according to the invention will be described and discussed. Subsequently, features of the cavity insert 107 according to the second example that differ from the cavity insert 7 according to the first example will be described and discussed.

The cavity insert 7 has a tubular inner part 8 and a tubular outer part 9, the inner part 8 being arranged inside the tubular outer part 9, the inner and outer parts having a common central axis 13. The inner part 8 has an inner surface 10 bounding the product cavity 3 and an outer circumferential surface 11 facing and contacting an inner, radially inwardly facing surface 12 of the outer part 9 and faces radially outwardly. The outer part 9 has an outer circumferential surface 14 contacting an inner, radially inwardly facing circumferential surface 15 of the insert cavity 6 of the mold plate 5 and faces radially outwardly. The mold plate 5 is mounted to a support plate 16. A nozzle 17 for injecting material to be molded projects through an opening 18 in the support plate 16 and is aligned with an injection gate 19 communicating with the product cavity 3.

The product cavity 3 is also bounded by an elongate mold core 20 that projects from a core plate (not shown) and by a neck ring pair 21. The core 20 is shaped to have its outer surface at a generally constant distance from the inner surface 10 of the inner part 8, so that the product cavity 3 is shaped for molding products with a generally uniform thickness. The neck ring pair 21 has an internal circumferential surface 22 shaped for molding a screw thread or other profile, which is to engage a closure cap after the bottle has been formed and filled. The neck ring pair 21 also holds the molded preform positioned over the core when the mold is opened and allows the preform to be ejected after it has cooled off sufficiently to retain its form when removed from the core 20 after the neck ring pair 21 has been opened in directions radial to the centre line 13. For cooling the core 20, the core is formed as a hollow object bounding a core cavity 24 into which a spout 23 projects for introducing a cooling fluid into the core cavity 24 near a distal end of the core 20 and causing the fluid to flow back to a proximal end of the core 20.

The inner part 8 and the outer part 9 are of different materials. The material of the inner part 8 has a specific thermal conductivity (at injection molding operating temperatures, e.g. in a temperature range of 100 - 200 °C) that is higher than the specific thermal conductivity of the material of the outer part 9. Preferably, the specific thermal conductivity of the material of the inner part is substantially higher than the specific thermal conductivity of hardened steel (about 16-24 W/mK), the most usual material for manufacturing molds for injection molding preforms. Preferably, the material of the inner part has a specific thermal conductivity of more than 60 W/mK, more than 100 W/mK or more than 200 W/mK. The higher threshold is preferred for fast cooling, but a material having a specific thermal conductivity that is only above one of the lower thresholds may be preferred depending on thermal and mechanical requirements and taking into account cost considerations.

The inner part is preferably of a copper alloy, for instance a bronze. Since the thermal conductivity of bronze tends to increase with the copper content, preference is given to a copper alloy containing more than 85% and more preferably more than 95% copper.

By providing an inner sleeve having a higher specific thermal conductivity than the material of the outer part, a quick and evenly distributed dissipation of heat away from hot plastic material injected in the product cavity can be achieved, so that the mold can be opened earlier, after which the preform can cool further until it has solidified enough to maintain its shape after removal from the core. The material of the outer part surrounding the inner part can be selected to be of sufficient hardness, strength and stiffness to withstand wear and mechanical loads, such as repeated impact contact with the other mold half assembly, to which a cavity insert is subjected while in operation. To this end, it is preferred that the material of the outer part is more wear resistant and/or has a higher hardness than the material of the inner part. A suitable material having such properties is for instance hardened steel, preferably tool steel. The relatively hard and strong outer part surrounding the inner part of high thermal conductivity further allows the inner part to be of a relatively thin walled design in spite of being of a relatively weak material, which is advantageous for effective heat transfer to cooling channels provided between the inner part and the outer part surrounding the inner part.

The cavity insert 7 has a parting surface 25 and an inner cone surface 26 extending around an open end of the product cavity 3. For obtaining a durable cavity insert, it is particularly advantageous if, as in the present example, these surfaces are at least partially constituted by surfaces of the outer part, which is made of the material that is harder and therefore more wear resistant than the material of the inner part. The parting surface 25 and an inner cone surface 26 of the cavity insert 7 contact a parting surface 28 and an outer cone surface 29 of the core plate assembly 2 each time the mold is closed and are subjected to substantial forces due to impact and closing forces exerted thereon, so that durability and in particular impact deformation of the cavity insert is not, or at least to a reduced extent, affected by the lower wear resistance of the material with the higher specific thermal conductivity of which the inner part is made.

The harder and more wear resistant material of the outer part 9 extends continuously from the parting surface 25 and inner cone surface 26 extending around the open end of the product cavity 3 to the bottom of the insert cavity 6, where the cavity insert is supported against closing forces in the direction of the central axis 13. Thus, loads exerted to the cavity inserts when the mold is closed are transferred to the dead end of the insert cavity via the harder and more wear resistant material of the outer part. The cavity insert does not need to be supported axially against the mold plate near the parting plane and the mold assembly can easily be assembled because the cavity inserts can be inserted in the insert cavities of the mold plate from the side where it will be mounted against the support plate and axially held between a shoulder in the insert cavity and the supporty plate as the mold plate is mounted to the support plate.

The inner surface and other surfaces of the inner part may be coated, for instance with a layer of chrome, to increase the wear resistance and/or to reduce the friction coefficient of the respective surface or surfaces.

The inner part 8 and the outer part 9 leave a cooling fluid flow channel 30 extending around the cavity 3 between the inner part 8 and the outer part 9. In the present example, the cooling fluid flow channel 30 has a plurality of loops 31 extending around the cavity 3. Each loop 31 is not endless, but ends short of its opposite end where flow channel sections connect the loop to upstream and downstream flow channel portions for leading the fluid in axial direction to the next loop 31 or (for the last loop) to a return channel. However, many cooling fluid flow channel patterns are conceivable, for instance patterns semi-circular loop and loops interconnected for supply and discharge of cooling fluid adjacent the same end of the product cavity.

Since the cooling fluid flows directly along an outer surface of the inner part 8 of thermally highly conductive material, heat is transferred to the cooling fluid particularly effectively. Moreover, the increased heat transfer allows the flow rate of the cooling fluid to be reduced, which is in turn advantageous, because the pressure drop over the cooling circuit that must be maintained can be reduced.

Along a tubular section of the product cavity 3, the cooling fluid flow channel 30 is bounded by grooves 32 in the inner surface of the outer part 9 and portions of the outer surface 11 of the inner part 8. If the channel would for example have a helical shape, a single helical groove could bound the part of the channel along the tubular portion of the product cavity. Along a rounded end portion of the product cavity 3 between the tubular portion and an end of the product cavity 3, the cooling fluid flow channel 30 is bounded by grooves 33, 34, 35 in the inner part 9.

Providing, the cooling channel grooves 32 along a tubular section of the product cavity 3 (at least partially) in the outer part 9 allows the inner part 8 (which is inserted in the outer part 9 in axial direction with the open end leading) to have a relatively small outer cross-section and allows reducing the amount of material cut to scrap from the generally relatively expensive material of the inner part 8 when the inner part 8 is manufactured. Also, this allows the grooves along the rounded end portion of the product cavity 3 to extend more closely along the product cavity without increasing the groove depth and/or allows the grooves to be less deep. In principle the same effect can also be achieved if the end portion of the product cavity is tapered instead of, or in addition to, being rounded. Providing that the grooves extend closely along the product cavity is advantageous for an intensive heat transfer to the cooling fluid, in particular in close proximity to the injection gate 19 where entering material is relatively hot and where the mold is exposed to heat from the nozzle and/or a hot runner. Keeping the depth of the grooves limited is advantageous for limiting the cross-sectional surface of the cooling channel, which is in turn advantageous for keeping flow velocities high enough to obtain turbulence and to avoid or at least counteract that a laminar flow character occurs, which would result in a reduced heat transfer.

Furthermore providing that, along a tubular section of the product cavity, the cooling fluid flow channel is bounded by a groove of the inner surface of the outer part and by portions of the outer surface of the inner part and wherein, at least along a tapered or rounded end portion between the tubular portion and an end of the product cavity, the cooling fluid flow channel is bounded by a groove in the inner part or by a groove of an outer surface of an end part axially adjacent the inner part and in the outer part, the end part bounding the product cavity on end opposite an open end of the product cavity is also advantageous for slenderness of the inner part and limiting the maximum depth of cooling fluid flow channel grooves in the inner part if the inner part and the outer part are not of different materials and/or the material of the inner part does not have a specific thermal conductivity higher than the specific thermal conductivity of the material of the outer part.

A particularly slender inner part is obtained and the need of providing grooves in its outer surface matching the positions of the grooves in the inner surface of the outer part is voided, because, in axial direction of the inner part 8, the outer surface 11 of the inner part 8 is straight along the grooves 32 in the outer part 9.

According to the example shown in the top part of the drawing, an integral portion 36 of the inner part 8 bounds the product cavity 3 on end opposite an open end of the product cavity 3. This provides the advantage that the inner part can be manufactured as a single part and that a seam between the end portion 36 and the rest of the inner part 8 is avoided.

The bottom part of the drawing below the centre line 13 shows an alternative to this embodiment, in which an end part 136 bounding the product cavity 3 on end opposite the open end of the product cavity 3 is a separate part distinct from the axially adjacent inner part 108.

This alternative requires the provision of two parts 108, 136 inside the outer part 9 (which can be the same for both embodiments) and a seam will show in the product at a position corresponding to the position where the inner part 108 and the end part 136 are positioned against each other. However, an advantage of this embodiment is that end parts defining different end shapes can be combined with inner parts of different lengths, so that no separate inner part is necessary for every shape/length combination. Furthermore, the inner part can be of a single constant cross-section, which allows manufacturing the inner parts with little cutting, i.e. very quickly and without producing much scrap. The latter is of particular advantage, because materials that have a high specific thermal conductivity, such as copper based alloys, tend to be expensive.

In the example shown in the bottom part of the drawing, the grooves 133, 134 and 135 bounding the cooling fluid flow channel are provided in the end part 136 which bounds the rounded end portion of the product cavity 3.

## Claims

1. A cavity insert for a preform injection mold, the cavity insert (7; 107) having a tubular inner part (8; 108) and a tubular outer part (9), the inner part (8; 108) having an inner surface (10) bounding a product cavity (3) and having an outer surface (11; 111) facing and contacting an inner surface (12) of the outer part (9), **characterized in that** the inner part (8; 108) and the outer part (9) are of different materials, the material of the inner part (8; 108) having a specific thermal conductivity higher than the specific thermal conductivity of the material of the outer part (9).

2. An insert according to claim 1, wherein the inner part (8; 108) is of a copper alloy.

3. An insert according to claim 1 or 2, wherein the material of the outer part (9) is more wear resistant than the material of the inner part (8; 108).

4. An insert according to claim 3, wherein the material of the outer part (9) has a higher hardness than the material of the inner part (8; 108).

5. An insert according to claim 4, wherein the material of the outer part (9) is a hardened steel.

6. An insert according to any of the claims 3-5, wherein at least a parting surface (25) or a cone surface (26)extending around an open end of the product cavity (3) is at least partially constituted by a surface of the outer part (9).

7. An insert according to any of the preceding claims, further comprising an end part (136) axially adjacent the inner part (108) and in the outer part (9), the end part (136) bounding the product cavity (3) on end opposite an open end of the product cavity (3).

8. An insert according to any of the preceding claims, wherein an integral portion of the inner part (8) bounds the product cavity (3) on end opposite an open end of the product cavity (3).

9. An insert according to any of the preceding claims, wherein the inner part (8; 108) and the outer part (9) leave a cooling fluid flow channel (30) extending around the product cavity (3) between the inner part (8; 108) and the outer part (9).

10. An insert according to claim 9, wherein, along a tubular section of the product cavity (3), the cooling fluid flow channel (30) is bounded by a groove (32) of the inner surface (12) of the outer part (9) and by portions of the outer surface (11; 111) of the inner part (8; 108) and wherein, at least along a tapered or rounded end portion between the tubular portion and an end of the product cavity (3), the cooling fluid flow channel (30) is bounded by a groove (33, 34, 35) in the inner part (8) or by a groove (133, 134, 135) of an outer surface of an end part (136) axially adjacent the inner part (108) and in the outer part (9), the end part (136) bounding the product cavity (3) on end opposite an open end of the product cavity (3).

11. An insert according to claim 10, wherein, in axial direction of the inner part (8; 108), the outer surface (11; 111) of the inner part (8; 108) is straight along at least a plurality of the grooves (32).

12. A mold plate assembly comprising a mold plate (5) having at least one insert cavity (6) and a cavity insert (7; 107) according to any one of the preceding claims mounted therein.

## Patentansprüche

1. Hohlraumeinsatz für eine Vorform-Injektionsform, wobei der Hohlraumeinsatz (7; 107) ein röhrenförmiges Innenteil (8; 108) und ein röhrenförmiges Außenteil (9) hat, welches Innenteil (8; 108) eine Innenfläche (10) hat, die einen Produkthohlraum (3) begrenzt, und eine Außenfläche (11, 111) die einer Innenfläche (12) des Außenteils (9) gegenüberliegt und diese berührt, **dadurch gekennzeichnet, dass** das Innenteil (8; 108) und das Außenteil (9) aus verschiedenen Materialien sind, wobei das Material des Innenteils (8; 108) eine spezifische Wärmeleitfähigkeit hat, die höher ist als die spezifische Wärmeleitfähigkeit des Materials des Außenteils (9).

2. Einsatz nach Anspruch 1, wobei das Innenteil (8; 108) aus einer Kupferlegierung ist.

3. Einsatz nach Anspruch 1 oder 2, wobei das Material des Außenteils (9) verschleißfester ist als das Material des Innenteils (8, 108).

4. Einsatz nach Anspruch 3, wobei das Material des Außenteils (9) eine höhere Härte hat als das Material des Innenteils (8; 108).

5. Einsatz nach Anspruch 4, wobei das Material des Außenteils (9) ein gehärteter Stahl ist.

6. Einsatz nach einem der Ansprüche 3-5, wobei mindestens eine Trennoberfläche (25) oder eine Kegeloberfläche (26), verlaufend um ein offenes Ende des Produkthohlraums (3), mindestens teilweise von einer Oberfläche des Außenteils (9) gebildet wird.

7. Einsatz nach einem der vorhergehenden Ansprüche, ferner umfassend ein Endteil (136), axial angrenzend an das Innenteil (108) und in dem Außenteil (9), wobei das Endteil (136) den Produkthohlraum (3) am Ende gegenüber einem offenen Ende des Produkthohlraums (3) begrenzt.

8. Einsatz nach einem der vorhergehenden Ansprüche, wobei ein integraler Abschnitt des Innenteils (8) den Produktraum (3) an dem Ende gegenüber einem offenen Ende des Produkthohlraums (3) begrenzt.

9. Einsatz nach einem der vorhergehenden Ansprüche, wobei das Innenteil (8; 108) und das Außenteil (9) einen kühlenden Flüssigkeitsdurchflusskanal (30), verlaufend um den Produkthohlraum (3) herum, zwischen dem Innenteil (8; 108) und dem Außenteil (9) verlassen.

10. Einsatz nach Anspruch 9, wobei entlang eines röhrenförmigen Abschnitts des Produkthohlraums (3) der kühlende Flüssigkeitsdurchflusskanal (30) von einer Rille (32) der Innenfläche (12) des Außenteils (9) und von Abschnitten der Außenfläche (11; 111) des Innenteils (8; 108) begrenzt wird, und wobei mindestens entlang eines verjüngten oder gerundeten Endabschnitts zwischen dem röhrenförmigen Abschnitt und einem Ende des Produkthohlraums (3) der kühlende Flüssigkeitsdurchflusskanal (30) begrenzt wird von einer Rille (33, 34, 35) in dem Innenteil (8) oder von einer Rille (133, 134, 135) einer Außenfläche eines Endteils (136), axial angrenzend an das Innenteil (108) und in dem Außenteil (9), welches Endteil (136) den Produkthohlraum (3) am Ende gegenüber einem offenen Ende des Produkthohlraums (3) begrenzt.

11. Einsatz nach Anspruch 10, wobei, in axialer Richtung des Innenteils (8; 108), die Außenfläche (11; 111) des Innenteils (8; 108) entlang mindestens mehrerer der Rillen (32) gerade ist.

12. Formplattenanordnung, umfassend eine Formplatte (5), in der mindestens ein Einsatzhohlraum (6) und ein Hohlraumeinsatz (7; 107) nach einem der vorhergehenden Ansprüche angebracht sind.

## Revendications

1. Bloc porte-empreinte pour un moule d'injection de préforme, le bloc porte-empreinte (7 ; 107) ayant une partie interne tubulaire (8 ; 108) et une partie externe tubulaire (9), la partie interne (8 ; 108) ayant une surface interne (10) délimitant une empreinte de produit (3) et ayant une surface externe (11 ; 111) faisant face et étant en contact avec une surface interne (12) de la partie externe (9), **caractérisé en ce que** la partie interne (8 ; 108) et la partie externe (9) sont réalisées avec des matériaux différents, le matériau de la partie interne (8 ; 108) ayant une conductivité thermique spécifique supérieure à la conductivité thermique spécifique du matériau de la partie externe (9).

2. Bloc selon la revendication 1, dans lequel la partie interne (8 ; 108) est réalisée avec un alliage de cuivre.

3. Bloc selon la revendication 1 ou 2, dans lequel le matériau de la partie externe (9) est plus résistant à l'usure que le matériau de la partie interne (8 ; 108).

4. Bloc selon la revendication 3, dans lequel le matériau de la partie externe (9) a une dureté plus importante que le matériau de la partie interne (8 ; 108).

5. Bloc selon la revendication 4, dans lequel le matériau de la partie externe (9) est un acier trempé.

6. Bloc selon l'une quelconque des revendications 3 à 5, dans lequel au moins une surface de joint (25) ou une surface conique (26) s'étendant autour d'une extrémité ouverte de l'empreinte de produit (3) est au moins partiellement constituée par une surface de la partie externe (9).

7. Bloc selon l'une quelconque des revendications précédentes, comprenant en outre une partie d'extrémité (136) axialement adjacente à la partie interne (108) et dans la partie externe (9), la partie d'extrémité (136) délimitant l'empreinte de produit (3) sur l'extrémité opposée à une extrémité ouverte de l'empreinte de produit (3).

8. Bloc selon l'une quelconque des revendications précédentes, dans lequel une partie solidaire de la partie interne (8) délimite l'empreinte de produit (3) sur l'extrémité opposée à une extrémité ouverte de l'empreinte de produit (3).

9. Bloc selon l'une quelconque des revendications précédentes, dans lequel la partie interne (8 ; 108) et la partie externe (9) quittent un canal d'écoulement de fluide de refroidissement (30) s'étendant autour de l'empreinte de produit (3) entre la partie interne (8 ; 108) et la partie externe (9).

10. Bloc selon la revendication 9, dans lequel, le long d'une section tubulaire de l'empreinte de produit (3), le canal d'écoulement de fluide de refroidissement (30) est délimité par une rainure (32) de la surface interne (12) de la partie externe (9) et par des parties de la surface externe (11 ; 111) de la partie interne (8 ; 108) et dans lequel, au moins le long d'une partie d'extrémité progressivement rétrécie ou arrondie entre la partie tubulaire et une extrémité de l'empreinte de produit (3), le canal d'écoulement de fluide de refroidissement (30) est délimité par une rainure (33, 34, 35) dans la partie interne (8) ou par une rainure (133, 134, 135) d'une surface externe d'une partie d'extrémité (136) axialement adjacente à la partie interne (108) et dans la partie externe (9), la partie d'extrémité (136) délimitant l'empreinte de produit (3) sur l'extrémité opposée à une extrémité ouverte de l'empreinte de produit (3).

11. Bloc selon la revendication 10, dans lequel, dans la direction axiale de la partie interne (8 ; 108), la surface externe (11 ; 111) de la partie interne (8 ; 108) est droite le long d'au moins une pluralité de rainures (32).

12. Ensemble de plaque de moule comprenant une plaque de moule (5) ayant au moins une empreinte de bloc (6) et un bloc porte-empreinte (7 ; 107) selon l'une quelconque des revendications précédentes, montés sur ce dernier.
